# EUROPÄISCHE PATENTSCHRIFT

(11) **EP 1 859 313 B1**
(45) Veröffentlichungstag und Bekanntmachung des Hinweises auf die Patenterteilung: **01.04.2009**
(21) Anmeldenummer: 06703823.2
(22) Anmeldetag: 27.01.2006
(51) Int. Cl.: G02F 1/01, G02B 5/20

(54) **SCHALTBARES INFRAROTFILTER**
SWITCHABLE INFRARED FILTER
FILTRE INFRAROUGE POUVANT ETRE COMMUTE

(30) Priorität: 15.03.2005 DE 102005011723
(43) Veröffentlichungstag der Anmeldung: 28.11.2007
(73) Patentinhaber: Fraunhofer-Gesellschaft zur Förderung der angewandten Forschung e.V., 80686 München (DE)
(72) Erfinder: WILD, Christoph, 79211 Denzligen (DE); WÖRNER, Eckhard, 79108 Freiburg (DE); OBLOH, Harald, 79285 Ebringen (DE)
(86) Internationale Anmeldenummer: PCT/EP2006/000724
(87) Internationale Veröffentlichungsnummer: WO 2006/097160

(56) Entgegenhaltungen:
- DE-A- 19 528 094
- DE-A1- 4 132 063
- US-A- 3 484 722
- US-A- 4 283 113
- US-A- 4 615 587
- US-A- 4 795 240
- US-A- 5 095 384
- US-A- 5 418 640
- US-A- 5 608 568
- US-B1- 6 489 614
- TZUK Y ET AL: "DIAMOND COOLING OF HIGH-POWER DIODE-PUMPED SOLID-STATE LASERS" IEEE JOURNAL OF QUANTUM ELECTRONICS, IEEE SERVICE CENTER, PISCATAWAY, NJ, US, Bd. 40, Nr. 3, März 2004 (2004-03), Seiten 262-269, XP001214135 ISSN: 0018-9197
- CHUPRINA V G ET AL: "An X-ray diffraction study of the processes of formation of vanadium coatings on diamond" SOVIET POWDER METALLURGY AND METAL CERAMICS USA, Bd. 26, Nr. 3, März 1987 (1987-03), Seiten 269-272, XP009064542 ISSN: 0038-5735

## Beschreibung

Die Erfindung betrifft ein schaltbares Infrarotfilter, welches ohne bewegte Teile von einem infrarot-transparenten in einen infrarot-opaken Zustand geschaltet werden kann. Solche Infrarotfilter lassen sich vorteilhaft einsetzen, um einen Lichtstrahl zu modulieren. Eine weitere Anwendung liegt im Bereich der schaltbaren Schutzfilter, beispielsweise zum Schutz von empfindlichen optischen Sensoren gegen Laserbestrahlung.

Aus der US 3,484,722 ist bekannt, einen Einkristall aus Vanadiumdioxid als schaltbares Infrarotfilter einzusetzen. Gemäß der Lehre dieser Druckschrift ist Vanadiumdioxid ein thermochromes Material, welches bei ca. 68°C einen Halbleiter-Metall-Übergang zeigt. Dieser Phasenübergang bewirkt einen Wechsel von einem Infrarot-transparenten zu einem Infrarot-opaken Zustand. Nachteilig ist hierbei insbesondere, dass der verhältnismäßig dicke Kristall nur langsam zu erwärmen und abzukühlen ist, so dass die Schaltvorgänge jeweils lange Zeit in Anspruch nehmen. Darüber hinaus kann das Infrarotfilter nur in Reflexionsrichtung betrieben werden, da die Transmission des Lichtstrahles durch die rückwärtig angebrachte Heizeinrichtung behindert wird.

Eine Weiterentwicklung dieses Infrarotfilters zeigt die US 4,795,240. Demnach wird das thermochrome Vanadiumdioxid als Schicht auf einen Siliciumwafer aufgebracht. Zwischen dem thermochromen Material und dem Silicium befindet sich dabei eine Isolationsschicht aus Siliciumoxid. Das Aufheizen des thermochromen Materials kann in einfacher Weise durch direkten Stromfluss durch den Siliciumwafer erfolgen.

Nachteilig ist jedoch auch bei dieser Lösung, dass das Filter aufgrund der großen thermischen Masse und der geringen Wärmeleitfähigkeit nur sehr langsam zwischen dem Infrarot-transparenten und dem Infrarot-opaken Zustand geschaltet werden kann. Weiterhin weist das erwärmte Filter im thermischen Gleichgewicht eine sehr inhomogene Temperaturverteilung auf. Dies führt zu einem räumlich inhomogenen Transmissionsverhalten.

Auch bei diesem vorbekannten Filter ist der Betrieb in Transmission nur eingeschränkt möglich. Dies liegt insbesondere darin begründet, dass dotiertes Siliciummaterial mit ausreichender elektrischer Leitfähigkeit Störstellen ausbildet, welche auch durch eintreffende infrarote Strahlung mit Photonenergien kleiner als die Bandlückenenergie ionisiert werden können. Folglich kommt es auch im Infrarot-transparenten Zustand des Vanadiumdioxids zu unerwünschter Absorption der hindurchtretenden Infrarotstrahlung.

Auch in der US 5,418,640 wird kein Infrarotfilter gezeigt, das eine Heizeinrichtung besitzt, die für den Betrieb des Filters in Transmission geeignet ist und sich trotzdem durch ein schnelles Schaltverhalten auszeichnet.

Ein Infrarotfilter mit Diamant als Trägermaterial entsprechend der Präambel des Anspruchs 1 ist aus der US 5 418 640 bekannt. Diamant besitzt einerseits eine hohe Wärmeleitfähigkeit und kann andererseits in der Form dünner Folien oder Schichten mit sehr geringer Wärmekapazität hergestellt werden. Somit reicht eine geringe Wärmeenergie für die Erwärmung des Filters aus. Aufgrund der hohen Wärmeleitfähigkeit verteilt sich die Wärme homogen über die Oberfläche des Filters. Weiterhin ist sichergestellt, dass nach Abschalten der Wärmezufuhr die Temperatur sehr schnell wieder absinkt. Somit ist auch die Schaltgeschwindigkeit erhöht.

Im Gegensatz zu anderen Trägermaterialien zeichnet sich Diamant durch einen breitbandigen Transparenzbereich aus. Dieser erstreckt sich vom ultravioletten Spektralbereich (230 nm) bis in den fernen Infraroten Spektralbereich (20 µm). Die einzige signifikante Absorptionsbande ist die Zwei-Phononen-Absorption bei 3 - 6 µm Wellenlänge. Der maximale Absorptionskoeffizient dieser Bande beträgt 12 cm⁻¹. Bei einer Folienstärke von z.B. 25 µm beträgt die maximale Absorption lediglich ca. 3 %. Das bedeutet, dass die Diamantfolie für die praktische Anwendung eine ununterbrochene Transparenz im gesamten infraroten Wellenlängenbereich aufweist. Durch eine Entspiegelungsschicht, beispielsweise eine dielektrische Schicht, ist es möglich, die Reflektionsverluste weiter zu minimieren. Das Filter kann insbesondere im Bereich der atmosphärischen Fenster zwischen 2 und 5 µm und 8 bis 12 µm eingesetzt werden.

Zur Herstellung des Trägermaterials aus Diamant eignet sich bevorzugt, aber nicht zwingend, die Abscheidung in an sich bekannter Weise aus einer aktivierten Gasphase, welche Wasserstoff und eine kohlenstoffhaltige Verbindung enthält und durch eingekoppelte Mikrowellenenergie oder einen Heizdraht aktiviert wird. Fallweise können der Gasphase auch noch weitere chemische Elemente oder Verbindungen zugesetzt werden um das Diamantmaterial des Trägers gezielt zu beeinflussen. Dem Fachmann ist dabei geläufig, dass der so entstandene Träger neben Diamant auch noch weitere Elemente enthalten kann, wie z.B. Wasserstoff, Bor, Stickstoff oder Metalle und Metallverbindungen welche entweder fein verteilt oder als Partikel mit Durchmessern von wenigen Nanometern bis mehreren Mikrometern im Material vorliegen können.

Gemäß der Lehre der US 5 418 640 wird auf mindestens eine Oberfläche des Trägermaterials eine Schicht aus einem thermochromen Material angeordnet. Diese Schicht stellt die eigentliche Filterschicht dar, welche abhängig von ihrer jeweiligen Temperatur entweder infrarot-transparent oder infrarot-opak ist. Unter einem infrarot-transparenten Zustand des Filters wird dabei ein Zustand mit erhöhter Durchlässigkeit für infrarote Strahlung verstanden. Unter einem infrarot-opaken Zustand wird dementsprechend ein Zustand mit verminderter Durchlässigkeit für infrarote Strahlung verstanden. Den jeweils genauen Prozentsatz der transmittierten oder absorbierten Strahlung wird der Fachmann an den jeweiligen Einsatzzweck des Filters anpassen.

Zur Abscheidung der thermochromen Schicht eignen sich alle bekannten Dünnschichtverfahren, wie beispielsweise thermisches oder Elektronenstrahl-Verdampfen, Laserablation, Sol-Gel-Verfahren und Sputtermethoden.

Zur Erwärmung der thermochromen Schicht ist eine Heizeinrichtung vorgesehen, die beispielsweise in Form einer Wärmequelle ausgebildet ist, welche an den nicht für die Infrarottransmission erforderlichen Flächenbereichen des Trägermaterials angekoppelt ist.

Die Aufgabe der vorliegenden Erfindung besteht darin, ein Infrarotfilter mit noch schnellerem Ansprechverhalten bereitzustellen, welches über eine ausreichend große Fläche eine homogene Temperatur und somit ein homogenes Transmissionsverhalten aufweist. Weiterhin besteht die Aufgabe darin, ein schaltbares Infrarotfilter anzugeben, welches eine vergrößerte Transmission aufweist.

Die Aufgabe wird erfindungsgemäß durch ein schaltbares Infrarotfilter gemäß Anspruch 1 gelöst.

Um eine schnelle Rückschaltung in den Infrarot-transparenten Zustand durch schnelle Abkühlung zu ermöglichen, ist erfindungsgemäß das Trägermaterial des Infrarotfilters mit einer Wärmesenke verbunden. Erfindungsgemäß ist zwischen Wärmesenke und Trägermaterial mindestens ein thermischer Widerstand vorgesehen, welcher mit der Wärmesenke verbunden ist. Sofern eine besonders schnelle und/oder besonders gleichmäßige Wärmeabfuhr gewünscht wird, können auch mehrere thermische Widerstände vorgesehen werden. Der Fachmann wird die Anzahl und die Dimensionierung der thermischen Widerstände fallweise so optimieren, dass je nach gewünschtem Anwendungszweck des Infrarotfilters eine schnelle Abkühlbarkeit, eine geringe Leistungsaufnahme oder eine gleichmäßige Erwärmung erzielt werden.

Ein mechanisch besonders robustes und schnell ansprechendes Infrarotfilter gemäß der vorliegenden Erfindung ergibt sich insbesondere dann, wenn die Heizeinrichtung als elektrischer Dünnschicht-Heizwiderstand direkt auf dem Diamant-Trägermaterial abgeschieden ist. Ein solcher Heizwiderstand besteht dabei aus einem Metall oder einer Legierung. Die Heizwiderstände können geradlinig oder mäanderförmig oder nach Art eines Gitters oder Netzes verlaufen. Sofern das erfindungsgemäße Infrarotfilter in Reflektion betrieben werden soll, kommt auch eine flächige Metallisierung in Frage, welche sowohl als elektrischer Heizwiderstand als auch als Reflektorspiegel verwendbar ist.

Die Metallisierung ist beispielsweise durch bekannte Dünnschichtmethoden wie Aufdampfen oder Sputtern erhältlich. Die Beschichtung von Teilbereichen erfolgt dabei in an sich bekannter Weise durch Auflegen des Bauteils auf eine Maske oder durch Photolithographie.

Bevorzugt bestehen die Heizstrukturen aus einem Metall oder einer Legierung, welche Titan und/oder Platin enthält. Diese Elemente lassen sich in vorteilhafter Weise haftfest auf der Diamantoberfläche abscheiden und weisen einen günstigen elektrischen Widerstand auf, welcher leicht handhabbare Spannungen und Ströme für den Betrieb der Heizeinrichtung zur Folge hat.

Sofern das Infrarotfilter in Transmission betrieben werden soll, haben die Heizstrukturen bevorzugt eine Breite von etwa 1 µm bis etwa 50 µm. Bei einem Abstand von etwa 250 µm bis etwa 1000 µm wird dabei die Transmission des Filters nur geringfügig beeinträchtigt, andererseits aber bedingt durch die gute Wärmeleitfähigkeit des Diamanten eine gleichmäßige Erwärmung sichergestellt. Die Schichtdicke wird der Fachmann aufgrund des gewünschten Leiterquerschnitts einstellen.

Besonders vorteilhaft wird die Metallisierung auf einer ersten Oberfläche des flächigen Trägermaterials ausgeführt und die Abscheidung des thermochromen Materials auf einer zweiten, gegenüberliegenden Oberfläche des Trägermaterials. Somit kann auch ohne eine isolierende Zwischenschicht ein Kurzschluss zwischen den einzelnen Strukturen der Heizeinrichtung vermieden werden.

In einer bevorzugten Ausführungsform des erfindungsgemäßen Infrarotfilters enthält das thermochrome Material Vanadiumoxid. Unter Vanadiumoxid im Sinne der vorliegenden Erfindung werden alle Verbindungen der Summenformel VₓO_{y} verstanden, also z.B. VO₂, V₂O₃ aber auch nichtstöchiometrische Mischungen. Daneben können weitere Elemente oder Verbindungen enthalten sein, welche die Eigenschaften des thermochromen Materials gezielt beeinflussen, z.B. die Haftfestigkeit, das Absorptionsverhalten oder die Temperatur des Phasenwechsels.

Insbesondere wird der Fachmann Vanadiumdioxid (x = 1, y = 2) in Betracht ziehen. Wie aus dem Stand der Technik bereits bekannt ist, handelt es sich bei Vanadiumdioxid um ein thermochromes Material, welches bei ca. 68°C einen Halbleiter-Metall-Übergang zeigt.

Neben Vanadiumdioxid eignet sich auch V₂O₃ als thermochromes Material. Bei V₂O₃ erfolgt der Halbleiter-Metall-Übergang bei -123°C. Damit eignet sich dieses Material für die Integration in Systeme mit gekühlten Sensoren. Gegenüber Raumtemperaturanwendungen besteht hier der Vorteil, dass das Trägermaterial aus Diamant in diesem Temperaturbereich eine noch höhere Wärmeleitfähigkeit und deutlich niedrigere Wärmekapazität aufweist.

Bevorzugt sind dabei Schichtdicken von 0,1 bis 1,0 µm. Die Schichtdicke der thermochromen Schicht ist dergestalt ausgewählt, dass einerseits eine nahezu vollständige Absorption gewährleistet ist, andererseits aber nur geringe Massen aufgeheizt und abgekühlt werden müssen. Zusammen mit der vergleichsweise niedrigen Temperatur, bei welcher der Phasenwechsel auftritt, ist der Schaltvorgang mit geringer Zu- bzw. Abfuhr von Wärmeenergie auszulösen. Dies erlaubt den Einsatz des Infrarotfilters mit geringen Heizleistungen. Damit kann das erfindungsgemäße Filter auch in empfindlicher Umgebung und in Anwendungen, die einen geringen Energieverbrauch erfordern, eingesetzt werden.

Die Dicke des Trägermaterials wird der Fachmann dergestalt wählen, dass einerseits eine hinreichende mechanische Stabilität des Infrarotfilters gegeben ist, andererseits aber möglichst geringe Massen erwärmt werden müssen und ein hinreichender Leiterquerschnitt zur Verfügung steht, um die Wärmeenergie wieder abzuführen. Der Fachmann wird dabei insbesondere Diamantstärken zwischen etwa 10 µm und etwa 40 µm in Betracht ziehen.

Als Wärmesenke kann besonders einfach ein Träger aus einem Metall oder einer Legierung oder einer Keramik dienen, auf dem das Bauelement im Randbereich montiert ist. Dieser ist dann entweder hinreichend groß dimensioniert um die Wärme an die Umgebung abzuführen oder aber er ist seinerseits wieder mit einem Kühlkörper oder einem Gehäuse verbunden. Daneben kann der Träger selbstverständlich auch Anschlussklemmen oder eine elektrische Signalführung aufnehmen.

Die Wärmesenke kann jedoch auch wiederum aus einem infrarot-transparentem Material hergestellt werden. In diesem Fall kann die Montage des Trägermaterials auch flächig erfolgen, d.h. ein eintreffender Lichtstrahl durchdringt zunächst die thermochrome Filterschicht, das Trägermaterial und die Wärmesenke. Als Material zur Herstellung der Wärmesenke eignet sich in diesem Fall beispielsweise Silicium, Germanium, Saphir, KBr, ZnSe oder ZnS.

Besonders bevorzugt wird in einer Ausführungsform ein thermischer Widerstand durch einen mäanderförmigen Diamantsteg gebildet. Erfindungsgemäß wurde erkannt, dass mäanderförmige Diamantstege im Randbereich des Trägermaterials in besonders einfacher Weise mittels Laserschneiden erhältlich sind. Durch die Schnittführung des Laserstrahles kann in einfacher Weise der Querschnitt und die Länge des thermischen Randwiderstandes eingestellt werden.

In einer weiteren Ausführungsform ist der Diamantträger über eine Zwischenschicht mit der Wärmesenke verbunden, welche eine spezifische Wärmeleitfähigkeit aufweist, welche mindestens um einen Faktor 100 niedriger ist als die des Trägermaterials. Sofern ein Infrarotfilter mit einer infrarot-transparenten Wärmesenke in Transmissionsrichtung betrieben werden soll, muss dazu auch die Zwischenschicht aus einem infrarot-transparenten Material bestehen. Diese Anforderungen werden beispielsweise durch Chalkogenidglas erfüllt.

Ohne Beschränkung des allgemeinen Erfindungsgedankens soll die Erfindung nachfolgend anhand von Figuren und eines Ausführungsbeispiels näher erläutert werden.
Figur 1 zeigt ein erfindungsgemäßes Infrarotfilter im Schnitt und in der Aufsicht.
Figuren 2 und 3 zeigen die durch das Bauelement nach Figur 1 transmittierte Intensität eines infraroten Laserstrahles gegen die Zeit.

Mittels einer Niederdrucksynthese wurde in einem Plasma-CVD-Prozess eine Diamantfolie (1) von etwa 25 µm Dicke in an sich bekannter Weise hergestellt. Die Folie wurde nach der Abscheidung poliert und mittels Laserschneiden in quadratische Stücke mit 25 x 25 mm² geschnitten.

Auf eine Seite dieser Diamantfolie (1) wurden Heizwiderstände (2) präpariert. Dazu wurde zunächst eine Lackschicht vollflächig aufgebracht und lithographisch strukturiert. Im Anschluss wurde auf die Oberfläche eine Titan- und anschließend eine Platinschicht mit einer Gesamtstärke von 0.1 µm mittels thermischer Verdampfung aufgebracht. Schließlich erfolgte die Ablösung der Metallschicht an den vom Lack bedeckten Stellen (Liftoff). Im Ergebnis erhält man so eine strukturierte Metallisierung, die einen Teil der Oberfläche streifenförmig bedeckt. Die Breite eines einzelnen Metallstreifens (2) beträgt dabei 10 µm, wobei die Metallstreifen mit einem Abstand von 0.5 mm angeordnet sind. In dem Bereich der Diamantfolie, welcher zur Transmission der Infrarotstrahlung vorgesehen ist, sind somit zwei Prozent der Oberfläche mit Metall belegt. Dementsprechend sind 98 Prozent der Oberfläche frei und stehen zur Transmission einfallenden Lichtes zur Verfügung. Im Randbereich der Diamantfläche werden größere Metallflächen (7) vorgesehen, welche der Kontaktierung der feineren Metallstreifen (2) dienen.

Zur Ausbildung definierter thermischer Randwiderstände (3), welche die Abfuhr der Wärmeenergie an eine Wärmesenke (4) ermöglichen, werden mittels Laser im Randbereich der Diamantfolie mehrere Einschnitte (5) angebracht. Somit verbleiben mäanderförmige Diamantstrukturen, welche aufgrund ihrer vergrößerten effektiven Länge und ihres verringerten Querschnittes einen thermischen Widerstand (3) darstellen.

Auf der der Metallisierung gegenüberliegenden Oberfläche der Diamantfolie wird eine 0,4 µm dicke Schicht (6) aus Vanadiumdioxid mittels Sputtern eines V₂O₃ Targets in einer O₂/Ar Atmosphäre aufgebracht.

Die so vorbereitete Diamantfolie wird mit ihrem äußeren Rand auf einen quadratischen, metallischen Rahmen (4) geklemmt. Dieser Rahmen dient sowohl als mechanischer Träger des Bauelementes als auch als Wärmesenke (4), die das Bauteil über die thermischen Randwiderstände schnell und gleichmäßig abkühlt.

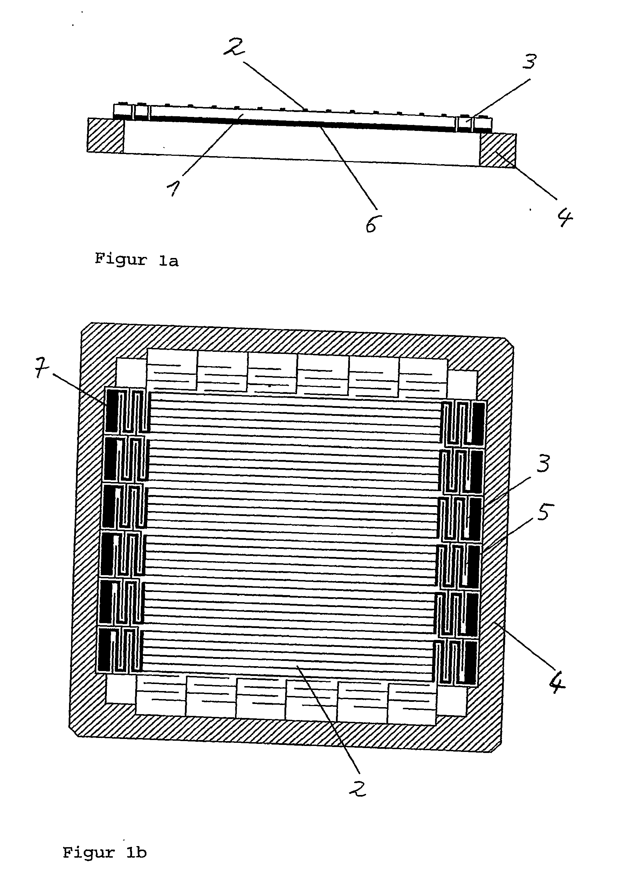

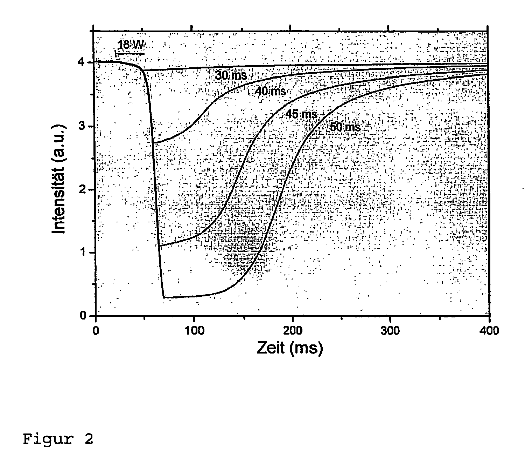

Figur 2 zeigt die durch das Bauelement nach Figur 1 transmittierte Intensität gegen die Zeit. Dargestellt ist eine Kurvenschar von vier unterschiedlichen Versuchen, wobei die elektrische Widerstandsheizung jeweils für 30, 40, 45, oder 50 Millisekunden eingeschaltet wurde. Die Heizleistung betrug jeweils 18 Watt, so dass die jeweils deponierte Wärmeenergie 0.54, 0.72, 0.81 und 0.9 Joule beträgt.

Figur 2 zeigt, dass durch den Eintrag von 0.9 J thermischer Energie in 50 ms innerhalb von 30 Millisekunden die transmittierte Intensität auf unter 10 % absinkt. Nach dem Abschalten der Heizung kühlt die Diamantfolie innerhalb 100-200 Millisekunden wieder aus und erlaubt der Filterschicht aus Vanadiumdioxid einen erneuten Phasenübergang in den Infrarot-Transparenten Zustand.

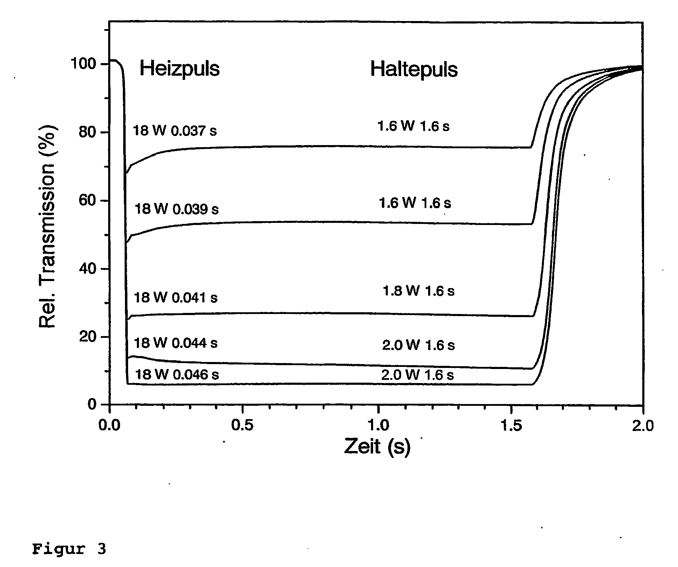

Figur 3 zeigt, dass der infrarot-opake Zustand auch über längere Zeiträume aufrechterhalten werden kann. Dargestellt ist wiederum die durch das Bauelement nach Figur 1 transmittierte Intensität gegen die Zeit. Dargestellt ist eine Kurvenschar von fünf unterschiedlichen Versuchen, bei denen nach dem Heizpuls die Temperatur durch Anlegen eines 1.6 Sekunden langen Haltepulses konstant gehalten wurde. Die elektrische Leistung des Haltepulses lag dabei niedriger als die des Heizpulses. Die verwendeten Heizleistungen und Heizdauern sind im Detail in Figur 3 angegeben. Die Messungen zeigen, dass die Transmission des untersuchten Filters durch die Kombination mit einem Heizpuls über längere Zeiträume auf unterschiedliche Niveaus eingestellt werden kann.

## Patentansprüche

1. Schaltbares Infrarotfilter, bestehend aus einem Träger (1), dessen Material Diamant umfasst, und auf welchem zumindest einseitig eine Filterschicht (6) aus einem thermochromen Material angeordnet ist und welches mit einer schaltbaren Heizeinrichtung (2) verbunden ist,
**dadurch gekennzeichnet, dass** der Träger (1) mit einer Wärmesenke (4) über mindestens einen thermischen Widerstand (3) verbunden ist.

2. Infratrotfilter nach Anspruch 1,
**dadurch gekennzeichnet, dass** das thermochrome Material Vanadiumoxid umfasst.

3. Infratrotfilter nach Anspruch 1 oder 2,
**dadurch gekennzeichnet, dass** das thermochrome Material VO₂ oder V₂O₃ umfasst.

4. Infrarotfilter nach einem der Ansprüche 1 bis 3,
**dadurch gekennzeichnet, dass** das Trägermaterial (1) aus Diamant durch CVD-Verfahren erhältlich ist.

5. Schaltbares Infrarotfilter nach einem der Ansprüche 1 bis 4
**dadurch gekennzeichnet, dass** die Heizeinrichtung (2) eine Schicht (2) aus einem Metall oder einer Legierung umfasst, welche auf dem Trägermaterial angeordnet ist.

6. Infrarotfilter nach Anspruch 5,
**dadurch gekennzeichnet, dass** die Schicht (2) der Heizeinrichtung (2) aus einem Metall oder einer Legierung strukturiert ist.

7. Infrarotfilter nach Anspruch 5 oder 6, **dadurch gekennzeichnet, dass** die Schicht (2) der Heizeinrichtung Titan und/oder Platin enthält.

8. Infrarotfilter nach einem der Ansprüche 6 oder 7,
**dadurch gekennzeichnet, dass** die Strukturgröße der Schicht (2) aus einem Metall oder einer Legierung eine Breite von etwa 1 µm bis etwa 150 µm aufweist.

9. Infrarotfilter nach einem der Ansprüche 1 bis 8,
**dadurch gekennzeichnet, dass** der Träger (1) eine Dicke von etwa 10 µm bis etwa 40 µm aufweist.

10. Infrarotfilter nach einem der Ansprüche 1 bis 9,
**dadurch gekennzeichnet, dass** die thermochrome Filterschicht (6) eine Dicke von etwa 0.3 µm bis etwa 0.5 µm aufweist.

11. Infrarotfilter nach einem der vorhergehenden Ansprüche, **dadurch gekennzeichnet, dass** die Wärmesenke (4) durch einen Träger und/oder ein Gehäuse gebildet wird.

12. Infrarotfilter nach einem der vorhergehenden Ansprüche, **dadurch gekennzeichnet, dass** die Wärmesenke (4) im Wellenlängenbereich von etwa 700 nm bis etwa 20 µm zumindest teilweise transparent ist.

13. Infrarotfilter nach einem der vorhergehenden Ansprüche,
**dadurch gekennzeichnet, dass** die Wärmesenke (4) aus einem Material besteht, welches ein Metall oder eine Legierung oder Silicium oder Germanium oder Saphir oder KBr oder ZnSe oder ZnS umfasst.

14. Infrarotfilter nach einem der vorherigen Ansprüche,
**dadurch gekennzeichnet, dass** der thermische Widerstand (3) durch einen mäanderförmigen Diamantsteg (5) gebildet wird.

15. Infrarotfilter nach Anspruch 14,
**dadurch gekennzeichnet, dass** der Diamantsteg (5) durch Laserschneiden erhältlich ist.

16. Infrarotfilter nach einem der vorhergehenden Ansprüche, **dadurch gekennzeichnet, dass** der thermische Widerstand durch mindestens eine Zwischenschicht gebildet wird, wobei die spezifische Wärmeleitfähigkeit der Zwischenschicht mindestens etwa einen Faktor 100 niedriger ist als die des Trägermaterials.

17. Infrarotfilter nach Anspruch 16,
**dadurch gekennzeichnet, dass** die Zwischenschicht ein Chalkogenidglas enthält.

18. Verwendung eines Infrarotfilters nach einem der Ansprüche 1 bis 17 in der Messtechnik.

19. Verwendung eines Infrarotfilters nach einem der Ansprüche 1 bis 17 zum Schutz eines Infrarotdetekors.

## Claims

1. A switchable infrared filter, consisting of a carrier (1) whose material comprises diamond, and on which at least on one side a filter coating (6) of a thermochromic material is arranged and which is connected to a switchable heating device (2)
**characterised in**
**that** the carrier (1) is connected to a heat sink (4) via at least one thermal resistance (3).

2. The infrared filter according to claim 1,
**characterised in**
**that** the thermochromic material comprises vanadium oxide.

3. The infrared laser according to claim 1 or 2,
**characterised in**
**that** the thermochromic material comprises VO₂ or V₂O₃.

4. The infrared filter according to one of the claims 1 to 3,
**characterised in**
**that** the carrier material (1) of diamond is obtained by means of a CVD method.

5. The switchable infrared filter according to one of the claims 1 to 4,
**characterised in**
**that** the heating device (2) comprises a coating (2) of a metal or an alloy, which is arranged on the carrier material.

6. The infrared filter according to claim 5
**characterised in**
**that** the coating (2) of the heating device (2) of a metal or an alloy is structured.

7. The infrared filter according to claim 5 or 6,
**characterised in**
**that** the coating (2) of the heating device contains titanium and/or platinum.

8. The infrared filter according to one of the claims 6 or 7
**characterised in**
**that** the structural size of the coating (2) of a metal or an alloy has a width of approx. 1 µm to approx. 150 µm.

9. The infrared filter according to one of the claims 1 to 8
**characterised in**
**that** the carrier (1) has a thickness of approx. 10 µm to approx. 40 µm

10. The infrared filter according to one of the claims 1 to 9
**characterised in**
**that** the thermochromic filter coating (6) has a thickness of approx. 0,3 µm to approx. 0,5 µm.

11. The infrared filter according to one of the previous claims,
**characterised in**
**that** the heat sink (4) is formed by a support and/or a housing.

12. The infrared filter according to one of the previous claims,
**characterised in**
**that** the heat sink (4) is at least partially transparent in the wavelength region from approx. 700 nm to 20 µm.

13. The infrared filter according to one of the previous claims,
**characterised in**
**that** the heat sink (4) consists of a material which comprises a metal or an alloy or silicon or germanium or sapphire or KBr or ZnSe or ZnS.

14. The infrared filter according to one of the previous claims,
**characterised in**
**that** the thermal resistance (3) is formed by a serpentine diamond web (5).

15. The infrared filter according to claim 14,
**characterised in**
**that** the diamond web (5) can be obtained by laser cutting.

16. The infrared filter according to one of the previous claims,
**characterised in**
**that** the thermal resistance is formed by at least one intermediate layer, wherein the specific thermal conductivity of the intermediate layer is less than that of the carrier material by at least a factor of approx. 100.

17. Infrared filter according to claim 16,
**characterised in**
**that** the intermediate layer contains a chalcogenide glass.

18. The use of an infrared filter according to one of the claims 1 to 17 in measurement technology

19. The use of an infrared filter according to one of the claims 1 to 17 for the protection of an infrared detector.

## Revendications

1. Filtre infrarouge commutable se composant d'un support (1) dont le matériau comporte du diamant et sur lequel est déposée au moins d'un côté une couche de filtre (6) en un matériau thermochrome et qui est relié avec un dispositif de chauffage commutable (2),
**caractérisé en ce que**
le support (1) est relié à un puits thermique (4) par au moins une résistance thermique (3).

2. Filtre infrarouge selon la revendication 1,
**caractérisé en ce que**
le matériau thermochrome comprend de l'oxyde de vanadium.

3. Filtre infrarouge selon la revendication 1 ou 2,
**caractérisé en ce que**
le matériau thermochrome comporte du VO₂ ou du V₂O₃.

4. Filtre infrarouge selon la revendication 1 ou 3,
**caractérisé en ce que**
le matériau support (1) en diamant peut être obtenu par des procédés de dépôt à la vapeur (CVD).

5. Filtre infrarouge selon la revendication 1 ou 4,
**caractérisé en ce que**
le dispositif de chauffage (2) comporte une couche (2) en un métal ou en alliage disposée sur le matériau support.

6. Filtre infrarouge selon la revendication 5,
**caractérisé en ce que**
la couche (2) du dispositif de chauffage (2) est structurée à partir d'un métal ou d'un alliage.

7. Filtre infrarouge selon la revendication 5 ou 6,
**caractérisé en ce que**
la couche (2) du dispositif de chauffage comprend du titane et/ou du platine.

8. Filtre infrarouge selon la revendication 6 ou 7,
**caractérisé en ce que**
la taille de la structure de la couche (2) en métal ou alliage a une largeur d'environ 1 µm jusqu'à environ 150 µm.

9. Filtre infrarouge selon les revendications 1 à 8,
**caractérisé en ce que**
le support (1) a une épaisseur d'environ 10 µm à environ 40 µm.

10. Filtre infrarouge selon les revendications 1 à 9,
**caractérisé en ce que**
la couche de filtre (6) thermochrome a une épaisseur d'environ 0,3 µm à environ 0,5 µm.

11. Filtre infrarouge selon les revendications précédentes,
**caractérisé en ce que**
le puits thermique (4) est constitué par un support et/ou un boîtier.

12. Filtre infrarouge selon les revendications précédentes,
**caractérisé en ce que**
le puits thermique (4) est transparent dans une plage de longueurs d'ondes comprise entre environ 700 nm et environ 20 µm.

13. Filtre infrarouge selon les revendications précédentes,
**caractérisé en ce que**
le puits thermique (4) se compose d'un matériau qui comprend un métal ou un alliage ou du silicium ou du germanium ou du saphir ou du KBr ou du ZnSe ou du ZnS.

14. Filtre infrarouge selon les revendications précédentes,
**caractérisé en ce que**
la résistance thermique (3) est constituée par une tige de diamant (5) en forme de méandre.

15. Filtre infrarouge selon la revendication 14,
**caractérisé en ce que**
la tige de diamant (5) est obtenue par découpe au laser.

16. Filtre infrarouge selon les revendications précédentes,
**caractérisé en ce que**
la résistance thermique est constituée par au moins une couche intermédiaire, la conductivité thermique spécifique de la couche intermédiaire étant inférieure d'environ un facteur 100 à celle du matériau de support.

17. Filtre infrarouge selon la revendication 16,
**caractérisé en ce que**
la couche intermédiaire comporte un chalcogénure vitreux.

18. Utilisation d'un filtre infrarouge selon les revendications 1 à 17, dans la métrologie.

19. Utilisation d'un filtre infrarouge selon les revendications 1 à 17, pour protéger un détecteur infrarouge.
